# EUROPÄISCHE PATENTSCHRIFT

(11) **EP 2 266 236 B1**
(45) Veröffentlichungstag und Bekanntmachung des Hinweises auf die Patenterteilung: **23.10.2013**
(21) Anmeldenummer: 09733428.8
(22) Anmeldetag: 16.03.2009
(51) Int. Cl.: H04L 1/00, H04L 1/24

(54) **VERFAHREN ZUM TESTEN DER ÜBERTRAGUNGSZUSTÄNDE EINES FUNKGERÄTS**
METHOD FOR TESTING THE TRANSMISSION MODES OF A RADIO DEVICE
PROCÉDÉ POUR TESTER LES MODES DE TRANSMISSION D'UN APPAREIL RADIO

(30) Priorität: 15.04.2008 DE 102008018807; 18.12.2008 DE 102008063612
(43) Veröffentlichungstag der Anmeldung: 29.12.2010
(73) Patentinhaber: Rohde & Schwarz GmbH & Co. KG, 81671 München (DE)
(72) Erfinder: PAULY, Andreas, 80799 München (DE); MÜLLER, Martin, 83024 Rosenheim (DE); TIETSCHER, Gerald, 85354 Freising (DE); GERLACH, Heino, 81541 München (DE); FISCHER, Volker, 81737 München (DE); BALLMANN, Stefan, 83026 Rosenheim (DE)
(74) Vertreter: Beder, Jens
(86) Internationale Anmeldenummer: PCT/EP2009/001891
(87) Internationale Veröffentlichungsnummer: WO 2009/127305

(56) Entgegenhaltungen:
- EP-A- 0 905 940
- WO-A-00/59250
- WO-A-02/082670
- DE-A1- 10 025 838

## Beschreibung

Die Erfindung betrifft ein Verfahren zum Testen der Übertragungszustände eines Geräts zur drahtlosen Kommunikation.

Digitale Mobilfunkgeräte, aber auch andere Geräte zur drahtlosen Kommunikation, werden immer komplexer und verfügen über immer mehr an die Kanalgüte anpassbare Übertragungsparameter, die, alleine durch deren sinnvolle Kombinationen, eine Vielzahl an Übertragungszuständen erlauben. Die Kanalgüte beschreibt dabei die Qualität des physikalischen Übertragungskanals. Der einzustellende Übertragungszustand wird mittels vom Mobilfunkgerät übertragener Entscheidungsinformation/en, z.B. einer gemessenen Übertragungsqualität, ausgewählt. Bei der Entwicklung dieser immer komplexer werdenden Geräte bedarf es einer Kontrolle, ob der aus den übermittelten Informationen ermittelte einzustellende Übertragungszustand korrekt ausgewählt wurde, bzw. ob die Entscheidungsinformation/en, auf deren Basis der einzustellende Übertragungszustand ausgewählt wird, korrekt ist.

Derzeit wird die Anpassung der Übertragungszustände an Entscheidungsinformationen wie z.B. die Kanalgüte nur indirekt oder statistisch über die übertragene Datenrate gemessen. Dabei werden z.B. Daten an ein zu testendes Funkgerät gesendet und die Kanalgüte wird über die Zeit variiert. Im einfachsten Fall wird die Kanalgüte mit fortschreitender Zeit von einer sehr schlechten Kanalgüte ausgehend z.B. linear immer weiter verbessert und dabei die Datenrate der übertragenen Daten gemessen. Die Datenrate hängt dabei z.B. von der gewählten Modulationsart ab und erlaubt so einen indirekten Rückschluss auf den tatsächlich verwendeten Übertragungszustand. Funktioniert die Anpassung der Übertragungszustände gut, erhält man also höhere Datenraten für jede Kanalgüte als bei schlechten Anpassungen. Die Funktion der Kanalgüte über die Zeit kann dabei immer weiter variiert werden, um Schwankungen in der Kanalgüte zu simulieren wie sie in der Wirklichkeit auftreten. So werden z.B. Fading-Oszillationen in der deutschen Patentschrift DE 100 25 838 B4 mit einer Monte Carlo Methode simuliert. WO 00/59250 A1 beschreibt ein weiteres Testverfahren, in dem die übertragene Daten mit einer lokal generierten Version verglichen werden und daraus die Übertragungsqualität ermittelt wird. Ein erstes mit der indirekten Messung der Übertragungszustandsanpassung einhergehendes Problem ist, dass die Datenrate viele interessante Informationen, wie z.B. die Häufigkeit von Übertragungszustandswechseln, oder welche Übertragungszustände angenommen werden, oder wie sich diese zeitlich entwickeln, nicht zeigt.

Ein zweites Problem ist, dass durch die beschriebenen Messmethoden des Stands der Technik Problembereiche, wie z.B. Umschaltpunkte, an denen von einem Übertragungszustand in einen anderen gewechselt wird, nicht individuell und nicht gezielt getestet werden können.

Aufgabe der Erfindung ist es, die oben beschriebenen Probleme des Stands der Technik zu lösen und ein verbessertes Testverfahren zu schaffen.

Das erfindungsgemäße Verfahren legt zuerst eine Kanalgüte eines Übertragungskanals zur Übertragung von Daten in diesem Übertragungskanal durch ein Testgerät zu einem zu testenden Gerät fest. Die Daten werden von dem Testgerät mit der festgelegten Kanalgüte an ein das zu testende Gerät geschickt, welches zumindest aus den übertragenen Daten zumindest eine Entescheidungsinformation ermittelt. Das zu testende Gerät schickt diese zumindest eine Entscheidungsinformation in einem Antwortsignal an das Testgerät, welches diese Entscheidungsinformationen aus dem Antwortsignal ausliest. Die Entscheidungsinformation/en aus dem Antwortsignal werden durch das Testgerät eindeutig einem einzustellenden Übertragungszustand zugeordnet. Die anfangs festgelegte Kanalgüte wird durch das Testgerät ebenfalls in eindeutiger Weise einem erwarteten Übertragungszustand zugeordnet. Durch das Vergleichen des erwarteten Übertragungszustands mit dem einzustellenden Übertragungszustand, kann eine Aussage über die Korrektheit des einzustellenden Übertragungszustands erzielt werden.

Die Unteransprüche betreffen vorteilhafte Weiterbildungen der Erfindung.

So ist es z.B. besonders vorteilhaft, den einzustellenden Übertragungszustand, der aus den Entscheidungsinformation/en ermittelt wurde, bei der weiteren Übertragung der Daten einzustellen.

Eine weitere vorteilhafte Weiterbildung der Erfindung ist die Nutzung der Übertragungsqualität als Entscheidungsinformation.

Bei dem erfindungsgemäßen Verfahren ist es vorteilhaft, dass durch die Einstellung einer Kanalgüte, die immer eindeutig einem Übertragungszustand zugeordnet werden kann, gezielt bestimmte Übertragungszustände eingestellt werden können. So kann man z.B. die Kanalgüte so einstellen, dass sie genau in dem Problembereich eines Umschaltpunktes zwischen zwei unmittelbar benachbarten Übertragungszuständen liegt und die darauffolgenden zurückgeschickten Entscheidungsinformationen untersuchen. Der Umschaltpunkt ist dabei diejenige Kanalgüte, bei der bei idealer Auswertung durch z.B. ein Mobilfunkgerät Entscheidungsinformationen zurückgesendet werden, die auf der Grenze eines Wechsels des zuzuordnenden Übertragungszustands liegen. Durch eine Variation der Kanalgüte über die Zeit können sehr viele Testszenarien zur gezielten Untersuchung der Übertragungszustände bzw. der Wechsel zwischen den Übertragungszuständen durchgeführt werden. Zum Beispiel durch infinitesimal kleine stochastische Sprünge der Kanalgüte um einen Umschaltpunkt kann gezielt das durch die Entscheidungsinformation/en verursachte Umschaltverhalten untersucht werden. Andererseits kann durch einen gezielten Sprung, bei dem mehrere Übertragungszustände, bzw. die diesen Übertragungszuständen zugeordneten Kanalgüteintervalle, übersprungen werden, hin zu einer Kanalgüte, die Anpassungsgeschwindigkeit der Übertragungszustände bei großen Kanalgüteänderungen untersucht werden.

Weiterhin ist es vorteilhaft, dass durch die eindeutige Zuordnung der Entscheidungsinformation/en zu den Übertragungszuständen nicht nur die Datenrate, sondern direkt die Übertragungszustände und deren Wechsel untersucht werden können. Damit kann unter anderem die zeitliche Abfolge und die Häufigkeit der Umschaltvorgänge analysiert werden und insbesondere die Korrektheit der durch das Mobilfunkgerät ermittelten Entscheidungsinformationen überprüft werden.

Das erfindungsgemäße Verfahren ist zum Testen all jener Geräte zur drahtlosen Kommunikation geeignet, die mehrere unterscheidbare Übertragungszustände unterstützen und diese durch bestimmte Entscheidungsinformationen vorgeben. Dies trifft vor allem auf Mobilfunkgeräte zu, welche alle Geräte sind, die Mobilfunkübertragungsstandards, wie GSM (Global System for Mobil Communication), UMTS (Universal Mobile Telecommunication System), LTE (Long Term Evolution), WiMAX (Worldwide Interoperability for Microwave Access) usw. zur Übertragung verwenden. Allerdings kann das erfindungsgemäße Testverfahren auch digitale Geräte mit drahtloser Kommunikation, insbesondere Funk, aus anderen Bereichen testen, wie z.B. des Wireless LAN (Local Area Network).

Ein mögliches Ausführungsbeispiel wird nachfolgend anhand der Zeichnung ausführlich beschrieben. In der Zeichnung zeigt:
- Fig. 1: ein Ausführungsbeispiel eines Testgeräts zur Durchführung des erfindungsgemäßen Verfahrens;
- Fig. 2: eine Messkurve der Datenrate über die Kanalgüte zur Erläuterung des erfindungsgemäßen Verfahrens;
- Fig. 3: ein mögliches erfindungsgemäßes Testszenario zur individuellen Untersuchung eines Umschaltpunktes;
- Fig. 4A: ein mögliches erfindungsgemäßes Testszenario zur Analyse großer Sprünge in der Kanalgüte, die Übergänge über mehrere Übertragungszustände beinhalten;
- Fig. 4B: die für das in Fig. 4A gezeigte Testszenario festgelegte Kanalgütefunktion in Abhängigkeit der Zeit;
- Fig. 5A: ein mögliches erfindungsgemäßes Testszenario zur Analyse möglicher Hystereseeffekte bei Sprüngen von verschiedenen Übertragungszuständen zu jeweils dem gleichen Übertragungszustand;
- Fig. 5B: die für das in Fig. 5A gezeigte Testszenario festgelegte Kanalgütefunktion in Abhängigkeit der Zeit; und
- Fig. 6: eine mögliche Visualisierung der erfindungsgemäßen Auswertung von dem in Fig. 4A gezeigten Testszenario durch das Darstellen der Übertragungszustände über die Zeit.

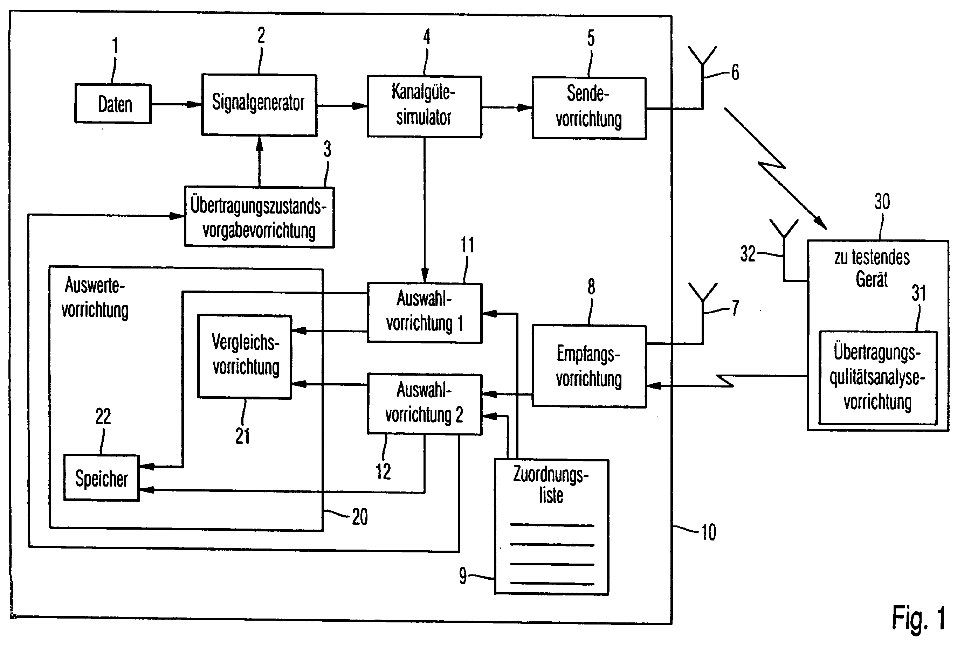

Fig. 1 zeigt ein mögliches Ausführungsbeispiel eines Testgeräts 10 zur Durchführung des erfindungsgemäßen Verfahrens. Im Folgenden wird ein beispielhaftes Testgerät 10 zum Testen eines Mobilfunkgeräts 30 als Gerät zur drahtlosen Kommunikation erläutert.

Das Testgerät 10 umfasst einen Signalgenerator 2, einen Kanalgütesimulator 4, eine Sendevorrichtung 5 einschließlich einer Antenne 6 , eine entsprechend mit einer weiteren Antenne 7 verbundene Empfangsvorrichtung 8, zwei Auswahlvorrichtungen 11 und 12, die mit einer Zuordnungsliste 9 verbunden sind, und eine Auswertevorrichtung 20.

Zuerst werden in dem Testgerät Daten 1 erzeugt. Diese Daten 1 können z.B. durch einen Zufallsgenerator erzeugt werden oder können aus vorher festgelegten Testdatensätzen bestehen. Alternative ist es auch möglich, die Daten durch eine nicht gezeigte Schnittstelle in das Testgerät 10 zu importieren. Die Daten 1 werden einem Signalgenerator 2 zugeführt, der die Daten 1 entsprechend eines einzustellenden Übertragungszustands auf ein digital moduliertes Hochfrequenzsignal moduliert. Die möglichen Übertragungszustände werden durch den dem Test zugrundeliegenden Standard festgelegt. Der Signalgenerator 2 erhält dabei den einzustellenden Übertragungszustand von der Übertragungszustandsvorgabevorrichtung 3.

Ein bestimmter Übertragungszustand, im Mobilfunk auch als Code Book Eintrag bezeichnet, ist ein Übertragungsparameter bzw. ein Satz von Übertragungsparametern, der das Erzeugen des die Daten übertragenden Hochfrequenzsignals eindeutig festlegt. Dabei unterstützen die verschiedenen Mobilfunkstandards jeweils die Einstellung einer Vielzahl von Übertragungsparametern, wie z.B. die Sendeleistung, das digitale Modulationsschema (Quadrature Phase Shift Keying (QPSK), Quadrature Amplitude Modulation (QAM), usw.), die Anzahl der zu sendenden Signale bei MIMO (Multiple Input Multiple Output) Systemen, die bei der Übertragung verwendeten Trägerfrequenzen (Subcarrier) bei OFDM (Orthogonal Frequency Division Multiplexing) Systemen, usw. Bei modernen Mobilfunkstandards ergibt sich durch alle sinnvollen Kombinationen aller für die Übertragung relevanten Übertragungsparameter eine sehr große Zahl möglicher Übertragungszustände.

Durch die Variation einzelner oder mehrerer Übertragungsparameter kann die Übertragung an die Übertragungsbedingungen, z.B. an die Kanalgüte und sich daraus ergebende Entscheidungsinformation(en) angepasst werden. Ein solcher Wechsel zwischen zwei sich unterscheidenden Code Book Einträgen wird im Folgenden auch als Umschaltung oder Umschaltvorgang bezeichnet. So kann z.B. bei einer stark gestörten Übertragung auf eine Übertragung mit einer höheren Leistung oder / und auf ein sichereres Modulationsschema mit dann allerdings geringerer Übertragungsrate umgeschaltet werden. Um diese Umschaltvorgänge gezielt zu testen, wird eine bestimmte Kanalgüte bei der Übertragung simuliert.

Der Signalgenerator 2 gibt das auf der Basis des von der Übertragungszustandvorgabevorrichtung 3 erhaltenen Übertragungszustands erzeugte Hochfrequenzsignal an den Kanalgütesimulator 4. Der Kanalgütesimulator 4 simuliert eine bestimmte zuvor festgelegte Kanalgüte durch die Simulation der bei einer realen Übertragung auftretenden Störungen wie z.B. Mehrwegeinterferenz, Fading, Verzerrung, usw. Dies kann im einfachsten Fall durch ein Hinzufügen eines weißen Rauschens zu dem erzeugten Hochfrequenzsignal realisiert werden oder bei etwas komplexeren Kanalgütesimulationsvorrichtungen 4 durch spezielle Fading- und Verzerrungssimulatoren, denen das Hochfrequenzsignal aus dem Signalgenerator 2 zugeführt wird und die ein nach definierten Vorgaben gestörtes Hochfrequenzsignal ausgeben. Die Stärke der Störung, welche umgekehrt proportional zur Kanalgüte ist, ist einstellbar. Die Einstellung der Kanalgüte kann z.B. durch in dem Kanalgütesimulator 4 fest gespeicherte Testszenarien erfolgen, z.B. als Kanalgütefunktionen über die Zeit. Alternative kann die einzustellende Kanalgüte bzw. die Folge von einzustellenden Kanalgüten auch über eine nicht dargestellte Schnittstelle von außerhalb eingegeben werden.

Die eingestellte Kanalgüte wird an eine erste Auswahlvorrichtung 11 geschickt. Die Auswahlvorrichtung 11 ordnet der eingestellten Kanalgüte über eine z.B. in einem Speicher vorhandene Zuordnungsliste 9 einen zu erwartenden Code Book Eintrag zu und sendet diesen weiter an die Vergleichsvorrichtung 21 der Auswertevorrichtung 20. Die Zuordnungsliste 9 enthält z.B. eine Tabelle, die sowohl jeder festgelegten Kanalgüte als auch jeder durch das zu testende Gerät gemessenen Übertragungsqualität bzw. dem als Reaktion zurückgesendeten Entscheidungsinformationen eindeutig einen Code Book Eintrag also einen bestimmten Übertragungszustand zuordnet.

Umgekehrt kann der Zuordnungsliste 9 die eindeutige Zuordnung eines Code Book Eintrags zu einem entsprechenden Kanalgüteintervall entnommen werden. Mit dieser Information ist es durch die Festlegung einer einem Code Book Eintrag entsprechenden Kanalgüte möglich, eine bestimmte Kanalgüte dem zu testenden Gerät vorzugeben oder einen Wechsel zu einem bestimmten Code Book Eintrag zu erzielen und diesen Umschaltvorgang auszuwerten.

Das entsprechend der Kanalgüteeinstellung gestörte Hochfrequenzsignal wird an eine Sendevorrichtung 5 geschickt und über eine Antenne 6 abgestrahlt. Das zu testende Mobilfunkgerät 30 empfängt das gesendete Hochfrequenzsignal über die Antenne 32 und wertet die übertragenen Daten aus. Dabei berechnet das Mobilfunkgerät 30 in einer Übertragungsqualitätsanalysevorrichtung 31 die Übertragungsqualität und erzeugt hieraus zumindest eine Entscheidungsinformation. Dazu werden meist den zu übertragenden Daten vor dem Senden Prüfsummen hinzugefügt, die es Mobilfunkgeräten 30 erlauben, Fehler in Bitblöcken und/oder auch in einzelnen Bits zu erkennen. Alternativ oder zusätzlich können die Abweichungen von bekannten Pilotsignalen der Übertragung analysiert werden.

Diese Informationen über die Übertragungsqualität werden als Entscheidungsinformationen in einem Antwortsignal an die Empfangsvorrichtung 8 des Testgeräts 10 zurückgeschickt. Sie beinhalten mindestens eine die Übertragungsqualität charakterisierende Größe, wie z.B. die Block Error Rate (BLER), das Bit Error Ratio (BER), der Channel Quality Index (CQI), Carrier to Interference plus Noise Ratio (CINR) oder der Received Signal Strength Indication (RSSI), oder ähnliche. Das Hochfrequenzsignal und das Antwortsignal können alternativ auch über eine Kabelverbindung übertragen werden.

Die so aus dem Antwortsignal erhaltene Übertragungsqualität wird einer zweiten Auswahlvorrichtung 12 zugeführt und anhand der Zuordnungsliste 9 einem für die weitere Kommunikation einzustellenden Code Book Eintrag zugeordnet. Dieser einzustellende Code Book Eintrag wird als einzustellender Übertragungszustand an die Übertragungszustandsvorgabevorrichtung 3 geschickt, welche den Signalgenerator 2 anweist, den einzustellenden Übertragungszustand bzw. Code Book Eintrag für die weitere Übertragung der Daten auszuwählen. Der einzustellende Code Book Eintrag wird von der zweiten Auswahlvorrichtung 12 zusätzlich an die Vergleichsvorrichtung 21 der Auswertevorrichtung 20 geschickt.

Die Vergleichsvorrichtung 21 der Auswertevorrichtung 20 vergleicht nun den zu erwartenden Code Books Eintrag mit dem einzustellenden Code Book Eintrag. Die Auswertevorrichtung 20 kann mit dem Ergebnis der Vergleichsvorrichtung 21 eine Aussage über die Korrektheit des einzustellenden Code Book Eintrags aufgrund der von dem Mobilfunkgerät ermittelten Entscheidungsinformationen treffen.

Dieser Vorgang wird z.B. in einer durch die Häufigkeit des Antwortsignals festgelegten Frequenz f durchgeführt. Dies führt zu einer Messung eines einzustellenden Code Book Eintrags, eines erwarteten Code Book Eintrags und eines Korrektheitswertes des einzustellenden Code Book Eintrags mit der Samplingrate f, was eine zeitliche Analyse der Messwerte erlaubt. Zu einer späteren Analyse können der einzustellende und der erwartete Code Book Eintrag in einem Speicher 22 der Auswertevorrichtung 20 gespeichert werden. Der Korrektheitswert muss als redundante Information nicht gespeichert werden, da er jederzeit durch einen neuen Vergleich des erwarteten mit dem einzustellenden Code Book Eintrag wieder hergestellt werden kann. Mit Hilfe der Informationen der Zuordnungsliste können zusätzliche Auswerteinformation gewonnen werden, wie z.B. im Falle eines falschen einzustellenden Code Book Eintrags, wie weit der falsche einzustellende Code Book Eintrag von dem richtigen entfernt ist.

Neben den rein die Verbindung betreffenden Entscheidungsinformationen können auch zusätzliche Entscheidungsinformationen, wie z.B. eine durch ein GPS (Global Position System) im Mobilfunkgerät 30 bestimmte Fortbewegungsgeschwindigkeit oder / und eine aufgezeichnete Vorgeschichte der einzustellenden Code Book Einträge als Entscheidungsinformation hinzugezogen werden. So kann z.B. bei einer hohen Geschwindigkeit des Mobilfunkgeräts oder / und bei einer aufgezeichneten Vorgeschichte der Code Book Einträge, die viele oder / und starke Schwankungen in der Kanalgüte und damit in den Code Book Einträgen aufweist, einen Wechsel zu einem weit entfernten einzustellenden Code Book Eintrag sofort zulassen. Andererseits kann im gegenteiligen Fall, in dem sich das Mobilfunkgerät 30 seit längerem nicht mehr bewegt hat und / oder es in seiner Vorgeschichte keine Schwankungen in der Kanalgüte bzw. den Code Book Einträge aufweist, das Mobilfunkgerät einen eventuell weit entfernten einzustellenden Code Book Eintrag verzögern, bis sich dieser Code Book Eintrag bestätigt oder als fehlerhaft herausstellt.

Ein von einem ersten Code Book Eintrag "weit entfernter" zweiter Code Book Eintrag ist ein Code Book Eintrag, dessen entsprechend zugeordnetes Kanalgüteintervall weit von dem entsprechenden Kanalgüteintervall des ersten Code Book Eintrags entfernt ist. D.h. zwischen diesen zwei entsprechenden Kanalgüteintervallen liegen zumindest zwei Kanalgüteintervalle, denen wiederum andere Code Book Einträge zugeordnet sind. Zwei "nahe liegende" Code Book Einträge sind zwei Code Book Einträge, deren entsprechende Kanalgüteintervalle nahe beieinander liegen, d.h. zwischen denen sich nur ein Kanalgüteintervall eines entsprechenden Code Book Eintrags oder nur eine kleine Anzahl von Kanalgüteintervallen von weiteren entsprechenden Code Book Einträgen befindet. Zwei "benachbarte" Code Book Einträge sind zwei Code Book Einträge, deren Kanalgüteintervalle aneinander angrenzen und die damit einen gemeinsamen Umschaltpunkt aufweisen. Für höher dimensionale Entscheidungsinformationsräume, d.h. mit n Größen als Entscheidungsinformation mit n>1, werden diese Begriffe entsprechend einem in diesem Raum definierten Entfernungsmaß zwischen diesen n-dimensionalen Volumen im Entscheidungsinformationsraum verwendet.

Alternativ ist es bei dem erfindungsgemäßen Verfahren denkbar, dass das Mobilfunkgerät 30 direkt den einzustellenden Code Book Eintrag auf der Basis der Entscheidungsinformation/en auswählt und in einem Antwortsignal an das Testgerät 10 schickt, sofern dies ein zukünftiger Übertragungsstandard z.B. im Mobilfunk vorsieht.

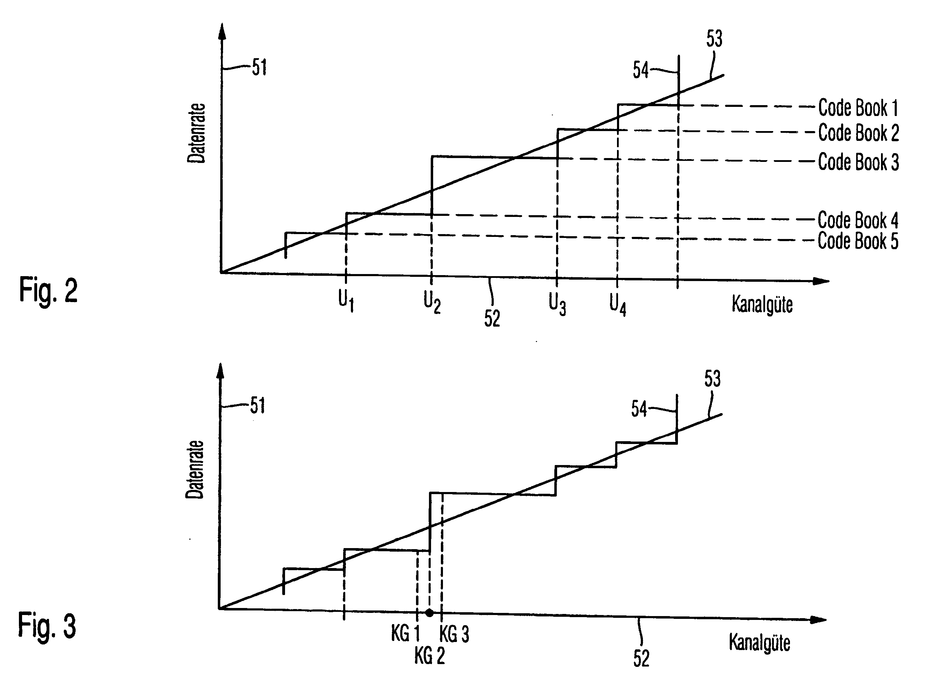

In Fig. 2 ist beispielhaft eine gemessene Datenrate über die Kanalgüte aufgetragen, wie sie im Stand der Technik gemessen wird.

Die x-Achse zeigt die Kanalgüte 52 und die y-Achse die Datenrate 51. Die aufgenommene Messkurve 54 zeigt die Datenrate über der Kanalgüte und weist diskrete Sprünge in der Datenrate auf, da erst ab einer gewissen besseren Kanalgüte ein Code Book Eintrag verwendet werden kann, der eine höhere Datenrate erlaubt. Bei einer weiteren Erhöhung der Kanalgüte 52 bleibt die Datenrate 54 innerhalb des nächsten Kanalgüteintervalls konstant bis die Kanalgüte 52 ab dem nächsten Umfschaltpunkt Uᵢ einen nächsten Code Book Eintrag zulässt. Durch den Stand der Technik wurde diese Zuordnung allerdings nicht ersichtlich. Die Gerade 53 zeigt eine an die Treppenfunktion 54 gefittete Ausgleichsgerade 53, deren Parameter Achsenabschnitt und Steigung zur Spezifizierung der Datenrate eines Mobilfunkgeräts 30 verwendet werden konnte.

In Fig. 2 wurde über den Stand der Technik hinaus, eine beispielhafte Zuordnung der Kanalgüte bzw. der Kanalgüteintervalle zwischen benachbarten Umschaltpunkten Uᵢ, Uᵢ₊₁ zu den Code Book Einträgen 1 bis 5 gezeigt.

In den Figuren 3 bis 5 werden anhand des in Fig. 2 gezeigten Zuordnungsbeispiels der Code Book Einträge zu den Kanalgüteintervallen verschiedene beispielhafte erfindungsgemäße Messszenarios vorgestellt.

Fig. 3 zeigt das Zuordnungsbeispiel aus Fig. 2 und ein Messszenario zum Untersuchen eines Umschaltpunktes Uᵢ, der bei der Kanalgüte KG 2 liegt. Ein Umschaltpunkt Uᵢ ist ein Punkt in der Kanalgüte als Punkt im Entscheidungsinformationsraum, bei dem im Idealfall von einem Code Book zu einem anderen umgeschaltet wird, d.h. bei dem ein Übertragungszustandsübergang auftritt.

Setzt man die Kanalgüte 52 nun auf genau einen solchen Umschaltpunkt Uᵢ bei KG 2 , kann man daraufhin die ermittelten einzustellenden Code Book Einträge auswerten, die durch die Antwortsignale nach der Einstellung dieser Kanalgüte vom Mobilfunkgerät 30 an das Testgerät 10 geschickt wurden. Dabei ist z.B. die Häufigkeit des Umschaltens ein interessanter Aspekt. So könnte ein "gutes" Mobilfunkgerät 30 den Problembereich als solchen erkennen und ständiges hin und her Wechseln zwischen den Code Book Einträgen 3 und 4 unterdrücken, während ein "schlechtes" Mobilfunkgerät 30 sehr viele Umschaltvorgänge verursacht.

Zur Untersuchung solcher Umschaltvorgänge zwischen benachbarten Code Book Einträgen, gibt es viele Variationen des oben beschriebenen Verfahrens. So kann z.B. die Kanalgüte 52 auch auf einen Punkt in nächster Nähe des Umschaltpunktes KG 2, d.h. zwischen KG 1 und KG 3, gesetzt werden, um zu kontrollieren, ob der richtige Code Book Eintrag eingestellt wird. Wird eine Kanalgüte 52 zwischen KG 1 und KG 2 eingestellt, wäre Code Book Eintrag 4 der korrekte einzustellende Code Book Eintrag. Wird eine Kanalgüte 52 andererseits zwischen KG 2 und KG 3 eingestellt, so wäre Code Book Eintrag 3 der richtige einzustellende Code Book Eintrag. Die Distanzangabe "in nächster Nähe" ist dabei eine Distanz, die in der Größenordnung des Fehlers der entsprechenden Übertragungsqualitätsbestimmung des Mobilfunkgeräts 30 liegt. Dieser Bereich definiert dabei die Problemzone eines Umschaltvorganges und kann bei der Durchführung des Verfahrens vorzugsweise eingestellt werden.

Ein weiteres Testszenario wäre, den Umschaltpunkt in nächster Nähe des Umschaltpunktes zufällig zu variieren, um die Häufigkeit des Umschaltens zu analysieren.

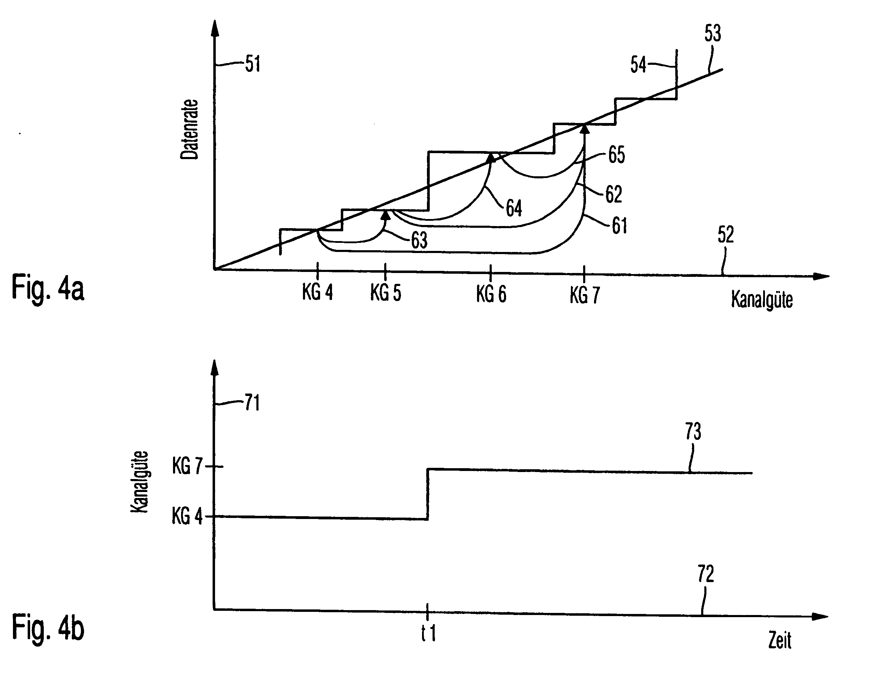

Fig. 4A zeigt das Zuordnungsbeispiel aus Fig. 2 und ein Messszenario zum Untersuchen eines Umschaltvorganges zu einem nicht benachbarten Code Book Eintrag.

Dazu wird zuerst für eine bestimmte Zeit die dem Code Book Eintrag 5 entsprechende Kanalgüte KG4 festgelegt und darauffolgend nach dem Zeitpunkt t1 des Kanalgütewechsels für ein bestimmte Zeit die dem Code Book Eintrag 2 entsprechende Kanalgüte 7 festgelegt, wie es in Fig. 4B gezeigt ist. Fig. 4B zeigt dabei die Kanalgütefunktion 73 in einem Diagramm, das die Kanalgüte 71 über die Zeit 72 darstellt, als ein mögliches Messszenario für die in Fig. 4A beschriebene Untersuchung.

Durch das Auswerten der vom Mobilfunkgerät 30 zurückgeschickten Entscheidungsinformationen und der daraus resultierenden, einzustellenden Code Book Einträge, kann herausgefunden werden, ob der Code Book Eintrag direkt von Code Book Eintrag 5, der der zuerst festgelegten Kanalgüte KG 4 entspricht, zu dem Code Book Eintrag 2, der der nach t1 festgelegten Kanalgüte KG 7 entspricht, springt. Dieser korrekte direkte Umschaltvorgang von Code Book Eintrag 5 nach Code Book Eintrag 2 wird in Fig. 4A durch den Pfeil 61 dargestellt. Dadurch könnte auch herausgefunden werden, ob ein Mobilfunkgerät 30 den beschriebenen Umschaltvorgang nicht direkt, sondern über den einzustellenden Code Book 3, wie durch die Pfeile 63 und 62 dargestellt ist, oder über alle dazwischen liegenden Code Book Einträge 3 und 4, umgeschaltet wird.

Hierbei kann auch der zeitliche Verlauf des Umschaltvorgangs analysiert werden. So kann z.B. eine Art Trägheitszeit nach t1 gemessen werden, in der das Antwortsignal noch den Code Book 5 als einzustellenden Übertragungszustand verursacht.

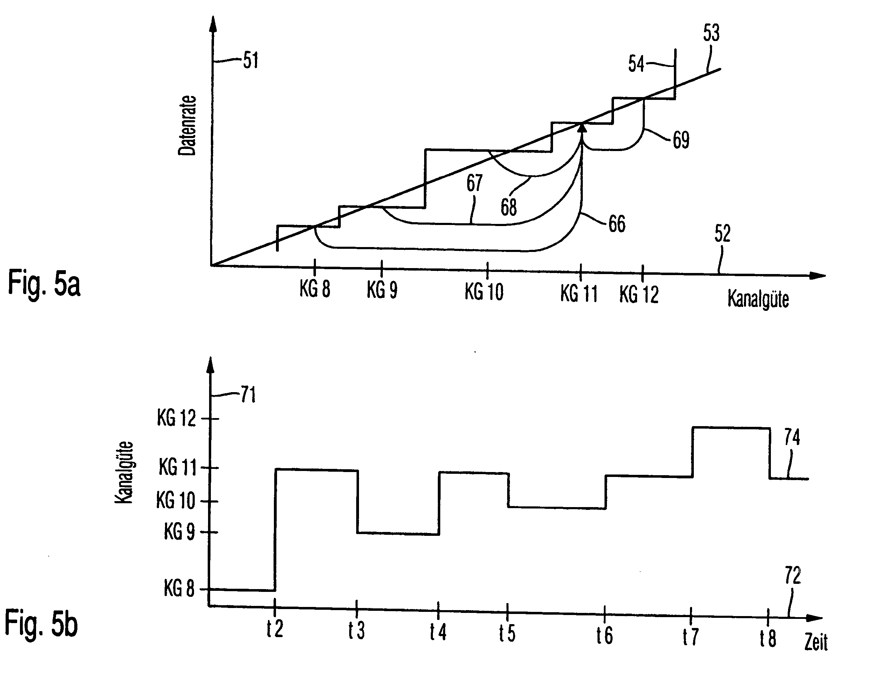

Fig. 5A zeigt das Zuordnungsbeispiel aus Fig. 2 und ein Messszenario zum Untersuchen eines Hystereseeffekts bei einem Umschaltvorgang.

Dazu werden jeweils für eine bestimmte Zeit verschiedene Kanalgüten KG 8, KG 9, KG 10 und KG 12, die jeweils einem Code Book Eintrag 5, 4, 3, und 1 entsprechen, in der Kanalgütesimulationsvorrichtung 4 festgelegt. Nach jeder für eine bestimmte Zeitdauer festgelegten Kanalgüte KG 8, KG 9, KG 10, KG 12 wird dabei jeweils für eine bestimmte Zeitdauer eine Kanalgüte KG 11 festgelegt, wie es in Fig. 5B gezeigt ist. Fig. 5B zeigt dabei die Kanalgütefunktion 74 in einem Diagramm, das die Kanalgüte 71 über die Zeit 72 darstellt, als ein mögliches Messszenario für die in Fig. 5A beschriebene Untersuchung.

Durch die in Fig. 5B gezeigte Kanalgütekurve, kann anhand des ausgewerteten Antwortsignals erreicht werden, dass unter der Vorraussetzung, dass das Mobilfunkgerät 30 die richtigen Entscheidungsinformationen schickt, von verschiedenen Code Book Einträgen KG 8, KG 9, KG 10, KG 12 immer wieder zu einem gleichen Code Book Eintrag KG 11 umgeschaltet wird. Die bestimmten Zeitdauern für die Festlegung einer Kanalgüte sollten bei diesem Messszenario solange gewählt werden, dass der Code Book Eintrag, der der festgelegten Kanalgüte entspricht, auch sicher eingestellt wird. Alternativ oder zusätzlich können die Ausgangs-Code Book Einträge 5, 4, 3, 1 auch durch eine Anweisung an die Übertragungszustandsvorgabevorrichtung 3 erzwungen werden.

Somit kann untersucht werden, welchen Einfluss der Ausgangs-Code Book Eintrag, hier Code Book Einträge 5, 4, 3 und 1, auf den Umschaltvorgang zu dem Ziel-Code Book Eintrag, hier Code Book Eintrag 2, hat. Wie verhalten sich Umschaltvorgänge 68 und 69 von benachbarten Code Book Einträgen 1 und 3? Wie verhalten sich Umschaltvorgänge 66 und 67 von nahe liegenden Code Book Enträgen? Wie verhalten sich nicht gezeigte Umschaltvorgänge von weit entfernten Code Book Einträgen? Das erfindungsgemäße Verfahren erlaubt es, Antworten auf diese Fragen zu finden.

Mit dem erfindungsgemäßen Verfahren kann auch die Vorgeschichte als zusätzliche Entscheidungsinformation der Übertragungszustände berücksichtigt werden. Wurde z.B. die Kanalgüte in der vorangehenden Zeit stetig besser, kann z.B. untersucht werden, ob das Mobilfunkgerät 30 das berücksichtigt. Z.B. indem es einen Übergang zu einem einer besseren Kanalgüte zugeordneten Übertragungszustand eher zulässt als einen Übergang zu einem Übertragungszustand der einer schlechteren Kanalgüte zugeordnet ist. Die hier aufgelisteten Analyse- und Messszenarien sind nur wenige der unzähligen Möglichkeiten, die das erfindungsgemäße Verfahren ermögicht.

Die Pfeile in Fig. 4A und in Fig. 5A stellen Umschaltvorgänge zwischen Code Book Einträgen dar, wie sie tatsächlich aufgrund des Antwortsignals des Mobilfunkgerätes eingestellt werden und haben mit der auf der x-Achse dargestellten Kanalgüte 52 nur mittelbar zu tun. Die Code Book Einträge sind zwar bestimmten Kanalgüteintervallen zugeordnet, aber bei den durch die Pfeile dargestellten Umschaltvorgängen werden die zugeordneten Kanalgüteintervalle nicht durch die Kanalgütesimulationsvorrichtung 4 festgelegt. Die Kanalgüte 52 wird nur auf Basis des Messszenarios, wie in Fig. 4B oder in Fig. 5B gezeigt, festgelegt.

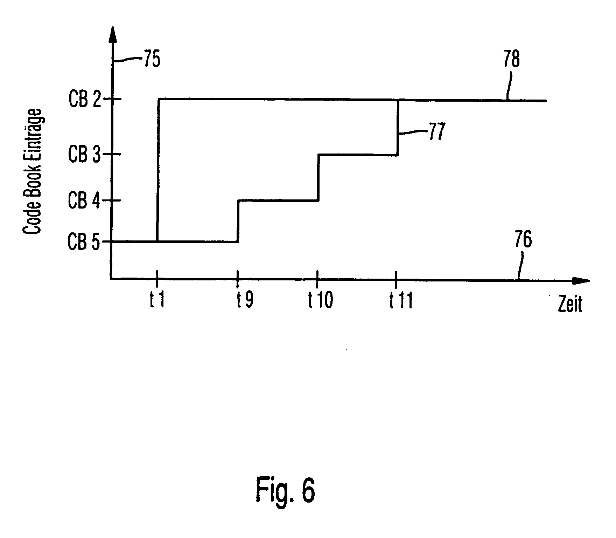

Abschließend zeigt Fig. 6 eine mögliche Visualisierung der zeitlichen Analyse der Code Book Einträge. Die tatsächlich eingestellten Code Book Einträge 77 des in den Figuren 4A und 4B dargestellten Messszenarios werden den erwarteten Code Book Einträgen 78 in Abhängigkeit der Zeit gegenübergestellt. Dies ist in einem Diagram dargestellt, in dem die diskreten Code Book Einträge 75 über die Zeit 76 aufgetragen sind.

Der ideale Code Book Eintrag 78 schaltet direkt bei der Änderung der Kanalgüte von KG 4 auf KG 7 zum Zeitpunkt t1 ebenfalls den Code Book Eintrag von CB 5 auf CB 2 um. Der tatsächlich eingestellte Code Book Eintrag-Verlauf 77 schaltet erst zu der Zeit t9 auf den nächsten benachbarten Code Book Eintrag 4 durch den Umschaltvorgang 63 um. Daraufhin sind zwei weitere Umschaltvorgänge 64 und 65 nötig, um schließlich zum Zeitpunkt t11 den Ziel-Code Book Eintrag 2 zu erreichen.

## Patentansprüche

1. Ein Verfahren zum Testen eines Geräts (30) zur drahtlosen Kommunikation umfassend folgende Schritte:
- Festlegen einer Kanalgüte eines Übertragungskanals zur Übertragung von Daten (1) in diesem Kanal durch ein Testgerät (10);
- Übertragen von Daten (1) von dem Testgerät (10) an ein zu testendes Gerät (30) mit der festgelegten Kanalgüte;
- Auswerten der mit der festgelegten Kanalgüte übertragenen Daten in dem zu testende Gerät (30) zur Ermittlung zumindest einer Entscheidungsinformation;
- Zurückschicken eines die zumindest eine Entscheidungsinformation enthaltendes Antwortsignals an das Testgerät (10);
- Zuordnen der zumindest einen aus dem Antwortsignal erhaltenen Entscheidungsinformation zu einem einzustellenden Übertragungszustand, wobei jeder Gesamtinhalt erhaltener Entscheidungsinformationen in eindeutiger Weise genau ein Übertragungszustand zugeordnet ist;
- Zuordnen der bei der Übertragung verwendeten Kanalgüte zu einem erwarteten Übertragungszustand; und
- Vergleichen des erwarteten Übertragungszustands mit dem einzustellenden Übertragungszustand.

2. Verfahren nach Anspruch 1,
**dadurch gekennzeichnet,**
**dass** die mit dem Antwortsignal empfangene, zumindest eine Entscheidungsinformation zumindest eine die Übertragungsqualität beschreibende Information aufweist.

3. Verfahren nach Anspruch 1 oder 2,
**dadurch gekennzeichnet,**
**dass** der einzustellende Übertragungszustand zur weiteren Übertragung der Daten (1) verwendet wird.

4. Verfahren nach einem der Ansprüche 1 bis 3,
**dadurch gekennzeichnet,**
**dass** die Kanalgüte durch das Testgerät (10) so eingestellt wird, dass sie auf oder in nächster Nähe oberhalb oder unterhalb eines Umschaltpunktes Uᵢ zwischen zwei Übertragungszuständen liegt.

5. Verfahren nach einem der Ansprüche 1 bis 4,
**dadurch gekennzeichnet,**
**dass** die Kanalgüte durch das Testgerät (10) so geändert wird, dass ein Wechsel zu einem nicht einem unmittelbar benachbarten Kanalgüteintervall zugeordneten Übertragungszustand herbeigeführt wird.

6. Verfahren nach einem der Ansprüche 1 bis 5,
**dadurch gekennzeichnet**,
die Kanalgüte durch das Testgerät (10) nacheinander so geändert wird, dass ausgehend von verschiedenen Kanalgüteintervallen der Wechsel zu einem ausgewählten Kanalgüteintervall simuliert wird.

7. Verfahren nach einem der Ansprüche 1 bis 6,
**dadurch gekennzeichnet,**
**dass** eine zeitliche Abfolge von erwarteten und einzustellenden Übertragungszuständen gespeichert und ausgewertet wird.

8. Verfahren nach Anspruch 7,
**dadurch gekennzeichnet,**
**dass** die Häufigkeit des Umschaltens zwischen verschiedenen einzustellenden Übertragungszuständen ermittelt wird.

9. Verfahren nach Anspruch 7 oder 8,
**dadurch gekennzeichnet,**
**dass** der zeitliche Verlauf der sich ändernden erwarteten und / oder eingestellten Übertragungszustände gemessen wird.

10. Verfahren nach einem der Ansprüche 7 bis 9,
**dadurch gekennzeichnet,**
**dass** die Änderungen von einzustellenden Übertragungszuständen in Bezug auf deren Vorgeschichte ausgewertet werden.

## Claims

1. Method for testing an appliance (30) for wireless communication comprising the following steps:
- stipulation of a channel quality for a transmission channel for the transmission of data (1) in this channel by a testing appliance (10);
- transmission of data (1) from the testing appliance (10) to an appliance (30) that is to be tested with the stipulated channel quality;
- evaluation of the data transmitted with the stipulated channel quality in the appliance (30) that is to be tested in order to ascertain at least one piece of decision information;
- return of a response signal containing the at least one piece of decision information to the testing appliance (10);
- association of the at least one piece of decision information obtained from the response signal with a transmission state that needs to be set, every total content of decision information that is obtained having precisely one associated transmission state in explicit fashion;
- association of the channel quality used for the transmission with an expected transmission state; and
- comparison of the expected transmission state with the transmission state that needs to be set.

2. Method according to Claim 1,
**characterized**
**in that** the at least one piece of decision information received with the response signal has at least one piece of information describing the transmission quality.

3. Method according to Claim 1 or 2,
**characterized**
**in that** the transmission state that needs to be set is used for further transmission of the data (1).

4. Method according to one of Claims 1 to 3,
**characterized**
**in that** the channel quality is set by the testing appliance (10) such that it is at or in closest proximity above or below a changeover point Uᵢ between two transmission states.

5. Method according to one of Claims 1 to 4,
**characterized**
**in that** the channel quality is changed by the testing appliance (10) such that a change to a transmission state that is not associated with a directly adjacent channel quality range is brought about.

6. Method according to one of Claims 1 to 5,
**characterized**
**in that** the channel quality is successively changed by the testing appliance (10) such that the change to a selected channel quality range is simulated from various channel quality ranges.

7. Method according to one of Claims 1 to 6,
**characterized**
**in that** a temporal sequence of expected transmission states and transmission states that need to be set is stored and evaluated.

8. Method according to Claim 7,
**characterized**
**in that** the frequency of the changeover between various transmission states that need to be set is ascertained.

9. Method according to Claim 7 or 8,
**characterized**
**in that** the time profile of the changing expected and/or set transmission states is measured.

10. Method according to one of Claims 7 to 9,
**characterized**
**in that** the changes in transmission states that need to be set are evaluated in relation to the previous history thereof.

## Revendications

1. Procédé pour tester un appareil (30) en vue d'une communication sans fil comportant les étapes suivantes :
- la détermination d'une qualité de canal d'un canal de transmission pour transmettre des données (1) dans ce canal par l'intermédiaire d'un d'appareil de test (10) ;
- la transmission des données (1) de l'appareil de test (10) à un appareil à tester (30) avec la qualité de canal déterminée ;
- l'évaluation des données transmises avec la qualité de canal déterminée dans l'appareil à tester (30) pour la détection d'au moins une information de décision ;
- le renvoi d'un signal de réponse contenant au moins une information de décision à l'appareil de test (10);
- l'affectation de là au moins une information de décision obtenue à partir du signal de réponse à un état de transmission à régler, où chaque contenu des informations de décision obtenue est associé de façon claire précisément à un état de transmission ;
- l'affectation de la qualité de canal utilisée lors de la transmission à un état de transmission attendu ; et
- la comparaison de l'état de transmission attendu à l'état de transmission à régler.

2. Procédé selon la revendication 1, **caractérisé en ce que**
la au moins une information de décision reçue avec le signal de réponse présente au moins une information décrivant la qualité de transmission.

3. Procédé selon la revendication 1 ou 2, **caractérisé en ce que**
l'état de transmission à régler est utilisé en vue d'une autre transmission des données (1).

4. Procédé selon l'une des revendications 1 à 3, **caractérisé en ce que**
la qualité de canal est réglée par l'appareil de test (10) de sorte qu'elle se trouve près ou très près au-dessus ou en dessous d'un point de commutation U₁ entre deux états de transmission.

5. Procédé selon l'une des revendications 1 à 4, **caractérisé en ce que**
la qualité de canal est modifiée par l'appareil de test (10) de sorte qu'un changement est provoqué à un état de transmission non affecté à un intervalle de qualité de canal immédiatement voisin.

6. Procédé selon l'une des revendications 1 à 5, **caractérisé en ce que**
la qualité de canal est modifiée coup sur coup par l'appareil de test (10) de sorte que le changement est simulé à un intervalle de qualité de canal sélectionné à partir de différents intervalles de qualité de canal.

7. Procédé selon l'une des revendications 1 à 6, **caractérisé en ce que**
une suite temporelle d'états de transmission attendus et à régler est mémorisée et évaluée.

8. Procédé selon la revendication 7, **caractérisé en ce que** la fréquence de commutation entre différents états de transmission à régler est déterminée.

9. Procédé selon la revendication 7 ou 8, **caractérisé en ce que**
la variation dans le temps des états de transmission attendus et/ou à régler changeants est mesurée.

10. Procédé selon l'une des revendications 7 à 9, **caractérisé en ce que** les modifications des états de transmission à régler sont mesurées par rapport à leurs antécédents.
